# EUROPEAN PATENT SPECIFICATION

(11) **EP 3 761 411 B1**
(45) Date of publication and mention of the grant of the patent: **13.03.2024**
(21) Application number: 19757860.2
(22) Date of filing: 22.02.2019
(51) Int. Cl.: H01M 4/48, C01G 41/02, H01M 4/13

(54) **ELECTRODE MATERIAL, ELECTRODE LAYER AND ELECTRICITY STORAGE DEVICE USING SAME, AND MANUFACTURING METHOD FOR ELECTRODE MATERIAL**
ELEKTRODENMATERIAL, ELEKTRODENSCHICHT UND ELEKTRIZITÄTSSPEICHERVORRICHTUNG DAMIT SOWIE HERSTELLUNGSVERFAHREN FÜR ELEKTRODENMATERIAL
MATÉRIAU D'ÉLECTRODE, COUCHE D'ÉLECTRODE ET DISPOSITIF DE STOCKAGE D'ÉLECTRICITÉ L'UTILISANT, ET PROCÉDÉ DE FABRICATION DE MATÉRIAU D'ÉLECTRODE

(30) Priority: 26.02.2018 JP 2018031857
(43) Date of publication of application: 06.01.2021
(73) Proprietor: KABUSHIKI KAISHA TOSHIBA, Minato-ku Tokyo 105-0023 (JP); Toshiba Materials Co., Ltd., Isogo-Ku Yokohama-Shi Kanagawa 235-0032 (JP)
(72) Inventor: SASAKI, Akito, Yokohama-shi, Kanagawa 235-0032 (JP); SASAKI, Atsuya, Yokohama-shi, Kanagawa 235-0032 (JP); FUKUSHI, Daisuke, Yokohama-shi, Kanagawa 235-0032 (JP); HIRABAYASHI, Hideaki, Yokohama-shi, Kanagawa 235-0032 (JP); KATAOKA, Yoshinori, Yokohama-shi, Kanagawa 235-0032 (JP)
(74) Representative: Henkel & Partner mbB
(86) International application number: PCT/JP2019/006711
(87) International publication number: WO 2019/163931

(56) References cited:
- EP-A1- 3 633 784
- WO-A1-2018/030477
- JP-A- 2008 103 684
- SASAKI, AKITO et al.: "Durability evaluation of hexagonal WO 3 electrode for lithium ion secondary batteries", Microelectronics Reliability, vol. 68, 2 December 2016 (2016-12-02), pages 86-90, XP029869687, DOI: doi:10.1016/j.microrel.2016.11.015

## Description

### FIELD

The embodiments described herein relate generally to an electrode material, an electrode layer and power storage device using the same, and a method for producing an electrode material.

### BACKGROUND

As a part of effective use of electricity, devices capable of charge and discharge have been developed. As the devices capable of charge and discharge, various devices, such as secondary batteries, condensers, and electric double-layer capacitors have been developed.

As parameters to indicate the performance of a device capable of charge and discharge, there are power density (W/kg) and energy density (Wh/kg). Power density indicates a speed at which electricity is supplied. The higher the power density is, the higher instantaneous power the device will have. Energy density indicates capacity. The higher the energy density is, the higher the capacity the device will have.

A secondary battery typically has a power density of 10 W/kg to 4000 W/kg and an energy density of 10⁻² Wh/kg to 200 Wh/kg. A condenser has a power density of 10⁴ W/kg to 10⁵ W/kg and an energy density of 10⁻³ Wh/kg to 10⁻² Wh/kg. An electric double-layer capacitor has a power density of 10³ W/kg to 10⁴ W/kg and an energy density of 1 Wh/kg to 10 Wh/kg.

The secondary battery, condenser, and capacitor have performance specialized either for power density or for energy density.

In recent years, effective use of stored electricity has been in demand. For example, electric vehicles may start quickly. In order to cope with a quick start, it is necessary to quickly supply electricity in a necessary amount to operate the engine. A secondary battery has a low power density and thus is not suitable for instantaneous power supply. Further, a condenser and a capacitor have a low energy density and thus are insufficient in electric capacity. As described above, none of the conventional devices capable of charge and discharge had coped with both power density and energy density.

International Publication No. 2016/039157 (Patent Document 1) discloses an electrode material made of tungsten oxide to which hopping conduction characteristics are imparted by providing oxygen deficiency. Further, International Publication No. 2014/142066 (Patent Document 2) discloses an electrode material made of a tungsten oxide having a hexagonal crystal structure.

### CITATION LIST

### PATENT LITERATURE

Patent Document 1: International Publication No. 2016/039157
Patent Document 2: International Publication No. 2014/142066

### SUMMARY

### TECHNICAL PROBLEM

The tungsten oxide electrode materials of Patent Document 1 and Patent Document 2 have reduced the internal resistance, increased the initial capacity, and improved the cycle retention ratio. However, the improvement of the cycle retention ratio is limited.

Embodiments described herein have been made to solve the problems described above, and relate to an electrode material that can reduce internal resistance and improve a cycle retention ratio. The invention is given by the claims.

### SOLUTION TO PROBLEM

An electrode material according to an embodiment has a feature of being made of a tungsten oxide powder having an oxygen deficiency and a hexagonal tunnel structure along a b axis and is given by claim 1.

### BRIEF DESCRIPTION OF THE DRAWINGS

FIG. 1 is a diagram showing an example electrode material according to an embodiment.
FIG. 2 is a diagram showing another example electrode material according to the embodiment.
FIG. 3 is a diagram showing an electrode material of Patent Document 2.
FIG. 4 is a conceptual diagram showing a configuration of a power storage device.

### DETAILED DESCRIPTION

An electrode material according to one embodiment is featured by being made of a tungsten oxide powder having an oxygen deficiency and a hexagonal tunnel structure along a b axis

Oxygen deficiency indicates that a part of the oxygen atoms constituting a tungsten oxide crystal lattice are not present in the crystal lattice. Namely, when the tungsten oxide is represented by WO₃₋ₓ, oxygen deficiency means that x > 0. The tungsten oxide powder is preferably represented by WO₃₋ₓ, and satisfy 0.1 ≤ x ≤ 0.3.

By virtue of having oxygen deficiency, the electrical resistance value of the tungsten oxide powder can be reduced. This can reduce the internal resistance of an electrode layer formed from the powder. The reduction in internal resistance leads to an improvement in power density. When the x value is less than 0. 1, the effect from providing the oxygen deficiency is small. On the other hand, when the x value is greater than 0.3, the resistance value decreases but the storage capacity is smaller. Therefore, the x value is preferably within a range of from 0.1 to 0.3.

The amount of oxygen deficiency is measured by chemical analysis to quantify the amount of KMnO₄ required to oxidize all W ions (W⁴⁺, W⁵⁺) having a low charge into W⁶⁺ using a KMnO₄ solution. By this analysis, the x value can be obtained by replacing with WO₃₋ₓ. When the x value exceeds 0, it is determined that there is oxygen deficiency.

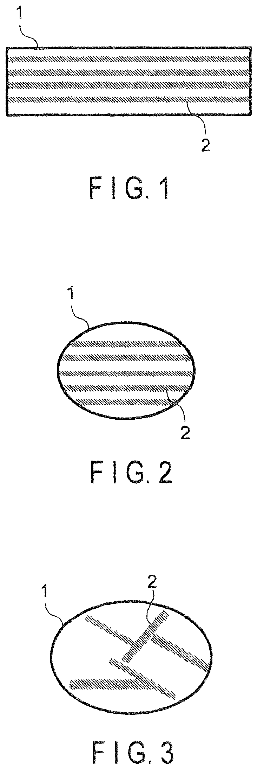

In addition, the electrode material according to the embodiment is made of a tungsten oxide powder having a hexagonal tunnel structure along the b axis. FIG. 1 shows an example electrode material according to the embodiment. FIG. 2 shows another example electrode material according to the embodiment. FIG. 3 is a diagram showing an electrode material of Patent Document 2. In the figures, reference numeral 1 denotes tungsten oxide powder, reference numeral 2 denotes a hexagonal tunnel. FIG. 1 illustrates the powder with a high aspect ratio, and FIG. 2 illustrates the powder with a low aspect ratio.

First, explanation will be made with reference to FIG. 1. In tungsten oxide powder 1, hexagonal tunnels 2 are formed along the b axis. Having a hexagonal tunnel structure along the b axis refers to a state in which hexagonal tunnel (s) 2 is formed linearly from one end to the other end in the b-axis direction. It is sufficient to have such a structure provided in at least one place. Alternatively, as shown in FIG. 1, there may be provided plural hexagonal tunnels 2.

For example, in the tungsten oxide powder having a hexagonal crystal structure described in Patent Document 2, the hexagonal tunnels had not been formed linearly, as shown in FIG. 3. The hexagonal tunnels are formed at random and not along the b axis, unlike in the embodiment.

Having a hexagonal tunnel structure along the b axis can make the path of Li ions linear. This allows the Li ions to be taken in and out smoothly.

The hexagonal tunnel structure can be measured with a scanning transmission electron microscope (STEM) . When a sample obtained by forming the powder into a thin film by a dispersion method is observed with an aberration corrected scanning transmission electron microscope (Cs-corrected STEM) at an acceleration voltage of 200 V, a hexagonal tunnel is found to be linear along the b axis. The electrode material according to the embodiment has oxygen deficiency and a hexagonal tunnel structure along the b axis in the tungsten oxide powder.

Having a hexagonal tunnel structure along the b axis refers to a state in which hexagonal tunnels are connected in the b-axis direction of the crystal structure of tungsten oxide in the tungsten oxide powder. Whether or not the powder has such a state can be examined by, for example, observation from one end to the other along the b-axis direction with a transmission electron microscope (TEM) by the above-described method. As a simplified method, the observation may be performed at both ends and the center along the b-axis direction.

The hexagonal tunnel structure is preferably grown in the b-axis direction. When the structure has grown in the b-axis direction, the hexagonal tunnel is stabilized. Even if charge and discharge are repeated, the hexagonal tunnel structure will not be deteriorated. The cycle retention ratio thus can be improved.

The degree of growth of the hexagonal tunnel structure in the b-axis direction can be examined by X-ray diffraction (XRD) analysis. When the electrode material is subjected to XRD analysis, a first peak intensity ratio I₍₀₁₀₎/I₍₁₀₃₎ in the X-ray diffraction spectrum is an index indicating both the degree of growth of the hexagonal tunnel structure in the b-axis direction and the orientation of the powder (electrode material). I₍₀₁₀₎ indicates a peak intensity of a peak belonging to a (010) plane. I₍₁₀₃₎ indicates a peak intensity of a peak belonging to a (103) plane.

When the hexagonal tunnel structure grows in the b-axis direction, the aspect ratio of the electrode material powder tends to increase. The more the orientation directions in the powder (electrode material) are aligned in the same direction, the greater the I₍₀₁₀₎ /I₍₁₀₃₎ ratio. The orientation is relevant to the direction in which Li ions are incorporated.

The XRD measurement is performed with a Cu target, a tube voltage of 40 kV, a tube current of 40 mA, an operation axis 2 θ/θ, a scanning range (20) of 10° to 50°, a scanning speed of 0.1°/sec, and a step width of 0.01°.

In XRD analysis, the peak intensity of a (010) plane is taken as I₍₀₁₀₎, and the peak intensity of a (103) plane is taken as I₍₁₀₃₎. In WO_{2.72}, the peak of the (010) plane is detected at about 23.5 °, and the peak of the (103) plane is detected at about 23.8°.

The ratio I₍₀₁₀₎ /I₍₁₀₃₎ between I₍₀₁₀₎ and I₍₁₀₃₎ is preferably in a range of from 1 to 10 (more preferably from 1.0 to 10.0) . When the growth in the b-axis direction is sufficient, I₍₀₁₀₎/I₍₁₀₃₎ is 1.0 or more. When the I₍₀₁₀₎/I₍₁₀₃₎ ratio is less than 1, the growth along the b-axis direction may be insufficient. In order to promote the growth, the ratio I₍₀₁₀₎/I₍₁₀₃₎ is preferably 1.1 or more. In addition, the ratio I₍₀₁₀₎/I₍₁₀₃₎ is preferably 10.0 or less. When the I₍₀₁₀₎/I₍₁₀₃₎ ratio exceeds 10, the growth in the b-axis direction may be excessive. When the growth in the b-axis direction is too great, the hexagonal tunnel structure is long. A hexagonal tunnel structure being long increases the capacity but somewhat decreases the instantaneous power in charging and discharging. It is considered that this is because the distance for Li ions to be extracted is long. On the other hand, if the orientation directions are too uniform, the ease of incorporation of Li ions becomes directional. Li ions would be easily incorporated in the orientation directions but difficult to incorporate in other directions. Therefore, the I₍₀₁₀₎/I₍₁₀₃₎ ratio is preferably from 1 to 10 (more preferably from 1.0 to 10.0), still more preferably from 1.1 to 9.0. The I₍₀₁₀₎/I₍₁₀₃₎ ratio is preferably 1.1 or more, more preferably 3 or more. As will be described later, it is also effective to pulverize a powder having a large I₍₀₁₀₎/I₍₁₀₃₎ ratio so as to make the ratio within the above range.

In addition, the tungsten oxide powder preferably has a true density of 6.0 g/cm³ or more. The true density is a density calculated from the volume of the powder itself. The mass of the powder is represented by M, the volume of the container is represented by N₁, the volume of gaps is represented by N₂, and the volume of the powder is represented by N₃. The true density can be given by N₃/M = (N₁-N₂)/M. The measurement is performed using He gas and by Boyle's law. The amount of a sample to be measured is about 0.8 g to 3.2 g.

As a pretreatment of the sample, a drying procedure at 120 °C for 12 hours or more is performed. Removing adsorbed water can suppress variations in the measured values.

A true density being 6.0 g/cm³ or more indicates that the tungsten oxide powder has a high density. The true density being high despite of the presence of a hexagonal tunnel structure along the b axis indicates that the particle size is small and that the portion(s) other than the hexagonal tunnel structure(s) has high density. The true density is preferably from 6.5 g/cm³ to 8.5 g/cm³. The theoretical value of the true density for WO_{2.72} is 7.719 g/cm³. With a true density significantly different from its theoretical value, the amount of oxygen deficiency may differ, and thus, the true density is preferably close to the theoretical value. This can improve the capacity.

The electrode material described above is preferably used for an electrode layer. The electrode layer has a feature wherein the above electrode material is included therein. The electrode layer is preferably either or both of a negative electrode layer and a positive electrode layer.

The thickness of the electrode layer is not limited to particular values, but is preferably from 1 µm to 100 um. When the thickness of the electrode layer is less than 1 µm, the absolute amount of the electrode material is too little to obtain a sufficient capacity. If the thickness exceeds 100 µm, the internal resistance of the electrode layer may increase. When the internal resistance increases, charging and discharging speed decreases.

The electrode layer preferably has a void fraction of from 10% to 80%. By providing voids in the electrode layer, area for contact with an electrolyte solution can be increased.

Note that, since the electrode material has the hexagonal tunnel structure, contact area with the electrolyte solution can be secured, even when the void fraction of the electrode layer is somewhat low. The electrode layer more preferably has a void fraction of from 10% to 50%. Further, the electrode layer may have a void fraction of from 20% to 80%.

When the electrode layer is subjected to XRD analysis, the I₍₀₁₀₎/I₍₁₀₃₎ ratio is preferably in a range of from 0.1 to 3. The I₍₀₁₀₎/I₍₁₀₃₎ ratio is more preferably in a range of from 0.5 to 2.0. The electrode layer having a second peak intensity ratio I₍₀₁₀₎ /I₍₁₀₃₎ in a range of from 0.1 to 3 indicates that the b axes are arranged at random with respect to the electrode surface. If much of the tungsten oxide powder having a hexagonal tunnel structure along the b axis included in the electrode layer are those that are pulverized, the b axes tend to be arranged at random. Further, by increasing the proportion of the pulverized powder, contact area of the electrode material with an electrolyte solution can be increased.

As described above, the I₍₀₁₀₎/I₍₁₀₃₎ ratio is an index indicating both the degree of growth of the hexagonal tunnel structure in the b-axis direction and the orientation of the powder (electrode material) . The I₍₀₁₀₎/I₍₁₀₃₎ ratio being from 0.1 to 3 for a powder used in an electrode layer indicates that the orientation of the powder is diminished. The electrode layer comes into contact with an electrolyte solution not only at the electrode surface outermost, but also at hexagonal tunnels and voids within the layer. By diminishing the orientation of the powder, the direction in which Li ions are taken into the electrode layer can be made random.

When there are many hexagonal tunnels oriented parallel to the electrode surface of the electrode layer, I₍₀₁₀₎ tends to be small. Thus, when there are many orientations in directions parallel to the electrode surface, the I₍₀₁₀₎/I₍₁₀₃₎ ratio may be less than 0.1. When there are many hexagonal tunnels oriented in a direction perpendicular to the electrode layer, I₍₁₀₃₎ tends to be small. Thus, when there are many orientations in the direction perpendicular to the electrode surface, the I₍₀₁₀₎/I₍₁₀₃₎ ratio may exceed 3. Note that, the orientation of the measurement sample in the XRD measurement has little effect on the I₍₀₁₀₎/I₍₁₀₃₎ ratio. By virtue of the hexagonal tunnels being oriented in a random manner, the direction in which Li ions can be taken in is not limited to either the planar direction or the perpendicular direction.

The powder having a first peak intensity ratio I₍₀₁₀₎/I₍₁₀₃₎ of from 1 to 10 is preferably pulverized to form an electrode layer having a second peak intensity ratio I₍₀₁₀₎/I₍₁₀₃₎ of from 0.1 to 3. More preferably, the powder having a first peak intensity ratio I₍₀₁₀₎/I₍₁₀₃₎ of from 3 to 10 is pulverized to attain a second peak intensity ratio I₍₀₁₀₎/I₍₁₀₃₎ of from 0.1 to 3. In order to lower the I₍₀₁₀₎/I₍₁₀₃₎ ratio for the electrode layer, it is effective to increase the proportion of the pulverized powder.

In addition, the tungsten oxide powder preferably has an average particle diameter along the major axis of from 1 um to 5 µm. An average particle diameter along the minor axis is preferably from 0.1 um to 1 µm. An average aspect ratio (major axis/minor axis) is preferably in a range of from 1 to 50. The average aspect ratio is more preferably from 1 to 20. When the tungsten oxide powder having a small aspect ratio is used for an electrode layer, the random orientation of the hexagonal tunnels can be more easily obtained.

The particle size and the aspect ratio of the tungsten oxide powder are measured by scanning electron microscope (SEM) observation. The major axis and the minor axis of the tungsten oxide powder seen in the SEM photograph are measured. The major axis is the longest diagonal line of the tungsten oxide powder seen in the SEM photograph. The minor axis indicates the width along a line drawn perpendicularly from the center of the major axis. The aspect ratio is a value obtained by dividing the major axis by the minor axis. These measurements are performed on 100 particles, and the average values thereof are respectively defined as the average particle diameter in the major axis, the average particle diameter in the minor axis, and the average aspect ratio.

Although FIGS. 1 and 2 show examples in which the b axis of the crystal lattice of the tungsten oxide powder is along the major axis of the powder particle, the relationship between the particle shape and the orientation of the crystal lattice of the tungsten oxide is not limited to those shown in the drawings. The diameter of the tungsten oxide crystal in the b-axis direction is not limited to the major axis or the minor axis of the powder particle.

The tungsten oxide powder after pulverization preferably has a BET specific surface of from 10 m²/g to 30 m²/g. The powder after pulverization tends to be in a state in which primary particles and secondary particles are mixed. Therefore, the BET specific surface is preferably used. The sample used for measuring the BET specific surface is 1 g.

In addition, the electrode layer preferably contains from 50 wt% to 100 wt% of the electrode material made of tungsten oxide powder having oxygen deficiency and the hexagonal tunnel structure along the b axis. When the amount of the tungsten oxide powder according to the embodiment in the electrode material constituting the electrode layer is less than 50% by mass, the effect is reduced. Therefore, the content of the electrode material made of the tungsten oxide powder according to the embodiment is preferably 50% by mass or more, and more preferably 70% by mass or more.

Examples of additives other than the electrode material according to the embodiment include a tungsten oxide powder having no hexagonal tunnel structure along the b axis. Examples of such a tungsten oxide powder include those described in Patent Document 1 and Patent Document 2. Molybdenum oxide powder or carbon powder may also be used. Examples of the carbon powder include acetylene black powder.

The electrode layer as described above is suitable for a power storage device. Examples of the power storage device include a device in which a negative electrode and a positive electrode are opposed to each other with a non-conductive layer interposed therebetween, and an electrolytic solution is used. This example device is a device capable of repeating a reaction of storing charges (charging) and a reaction of releasing charges (discharging) by oxidation-reduction reactions or by adsorption/desorption of ions.

In the electrode material according to the embodiment, both oxidation-reduction reactions and adsorption/desorption of ions can be performed. Therefore, the electrode material can be applied to a variety of power storage devices. The presence or absence of oxidation-reduction reactions can be examined by cyclic voltammetry. When charging and discharging is performed at a constant scanning voltage, a peak is observed at a specific voltage upon occurrence of an oxidation-reduction reaction. No peak is observed for ion adsorption/desorption.

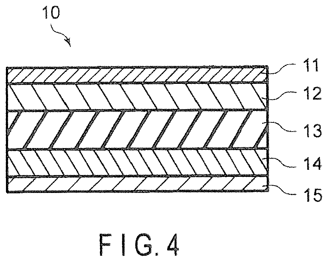

FIG. 4 is a conceptual diagram showing the configuration of a power storage device. In the drawing, reference numeral 10 denotes a power storage device; reference numeral 11 denotes a negative-electrode-side electrode layer; reference numeral 12 denotes a negative electrode layer; reference numeral 13 denotes a separator layer; reference numeral 14 denotes a positive electrode layer; and reference numeral 15 denotes a positive-electrode-side electrode layer. FIG. 4 shows the structure of a cell portion.

The negative-electrode-side electrode layer 11 and the positive-electrode-side electrode layer 15 are formed of an electro-conductive material. Examples of the electro-conductive material include aluminum, copper, stainless steel, platinum, ITO, IZO, FTO, SnO₂, and InO₃. The thickness is preferably in a range of from 5 µm to 50 µm.

Either the negative electrode layer 12 or the positive electrode layer 14 is an electrode layer according to the embodiment. The electrode layer according to the embodiment is preferably used for the negative electrode layer 12.

For the positive electrode layer 14, a Li composite oxide, such as LiCoO₂, LiMnO₂, or LiNiO₂, is preferably used. In terms of a Li counter electrode, a material of lower potential serves as the negative electrode, and a material of higher potential serves as the positive electrode. When put in combination with the positive electrode layer described above, the electrode layer according to the embodiment becomes a negative electrode layer. The Li composite oxide is widely used as a positive electrode active material. In other words, replacing a negative electrode with that of the embodiment can impart the performance as a power storage device.

The separator layer 13 serves to provide a certain interval between the negative electrode layer 12 and the positive electrode layer 14. Examples of the separator layer 13 include porous layers, such as a polyethylene porous layer and a polypropylene porous layer. The separator layer 13 is impregnated with an electrolytic solution containing Li ions. As the electrolytic solution, an organic solvent, an ionic liquid, or the like may be used. Examples of the organic solvent include ethylene carbonate (EC), propylene carbonate (PC), butylene carbonate (BC), dimethyl carbonate (DMC), diethyl carbonate (DEC), ethyl methyl carbonate (EMC), gamma butyrolactone (γ-BL), valerolactone (VL), and a mixed solvent thereof. Examples of the electrolyte include LiPF₆, LiBF₄, LiClO₄, LiCF₃SO₃, and mixed electrolytes thereof.

The power storage device includes a cell having the above-described stacked structure. In addition, in order to increase the capacity, the cell structure may be multilayered or may be put into a structure that is elongated then wound.

Such a power storage device is preferably used for vehicles, electronic apparatuses, or machinery.

Examples of the vehicles include automobiles and railways. Examples of the automobiles include motor-driven automobiles, such as hybrid automobiles and electric automobiles. The automobile is not particularly limited, and examples include a private car, a bus, a crane car, a truck, or the like.

An electronic apparatus refers to an electrically driven device. Further, the machinery includes equipment to be operated. Examples of the machinery include one selected from elevators, cranes, robots, medical devices, and machine tools.

Next, a method of producing the electrode material according to the embodiment will be described. The production method for the electrode material according to the embodiment is not limited, as long as the electrode material has the above-described configuration, but the following production method is exemplified as one for attaining a high yield.

As a method of obtaining tungsten oxide powder, a method of using a sublimation process is exemplified. The sublimation procedure is preferably any one of plasma treatment, arc treatment, laser treatment, and electron beam treatment. For the plasma treatment, inductively-coupled plasma treatment is preferred. Tungsten powder or tungsten oxide power is used as raw material powder, and plasma treatment is subjected thereto. In plasma treatment, the powder is introduced into a combustion flame. By performing the treatment in an oxygen-including atmosphere like atmospheric air, tungsten oxide particles can be obtained. By using the sublimation process, tungsten trioxide (WO₃) powder can be obtained. By producing WO₃ powder, the oxygen deficiency amount becomes more easy to control.

So long as tungsten trioxide (WO₃) powder can be obtained, production may be performed by other methods, such as a solution phase synthesis.

It is also effective to subject the obtained WO₃ powder to a heat treatment in an oxygen-including atmosphere. In the case where the tungsten oxide powder is produced through the sublimation process, the amount of oxygen in the resulting tungsten oxide powder may vary. This stems from the temperature being different between the inside and the outside of the combustion flame, which makes the degree of oxidation vary. Therefore, the heat treatment in the oxygen-including atmosphere can attain WO₃ without oxygen deficiency. As a result, WO₃ powder having small particle size and high crystallinity can be obtained.

Next, a heat treatment is performed in a non-oxidizing atmosphere. The non-oxidizing atmosphere is preferably a nitrogen-containing gas, a hydrogen-containing gas, or a mixed gas thereof. In particular, a mixed gas of hydrogen and nitrogen is preferable. The mixed gas preferably has a concentration in a range of from 1 vol% to 15 vol% of hydrogen and 85 vol% to 99 vol% of nitrogen. The mixed gas more preferably has a concentration in a range of from 1 vol% to 10 vol% of hydrogen and 90 vol% to 99 vol% of nitrogen.

The heat treatment temperature is preferably in a range of from 600 °C to 900 °C. The heat treatment temperature may be, for example, from 600 °C to 700 °C. The holding time is preferably in a range of from 2 minutes to 10 minutes. This can introduce a stable amount of oxygen deficiency. In particular, when the mixed gas of hydrogen and nitrogen as described above is used, the amount of oxygen deficiency can be easily controlled. An oxygen deficiency is a phenomenon in which oxygen in a crystal lattice drops out. When the mixed gas is used, an intended oxygen deficiency can be easily introduced in a short time, and thus grain growth can be suppressed.

Further, the hexagonal tunnel structure along the b axis can be formed by controlling the temperature and time of the heat treatment in the non-oxidizing atmosphere. If the temperature or time for the heat treatment is out of range, the amount of oxygen deficiency shows a decrease or increase, and the hexagonal tunnel structure becomes short or random in orientation.

In addition, it is preferable for the rate of temperature increase until the holding time of the heat treatment in the non-oxidizing atmosphere to be 2 °C/min or more. Further, the cooling rate after the holding time is preferably 5 °C/min or less. Making the temperature increase rate be 2 °C/min or more can shorten the time required to reach the holding time. This can prevent rapid grain growth during the process of temperature increase. The upper limit of the rate of temperature increase is preferably 10 °C/min or less. If the temperature increase rate is too high, heat transfer to the WO₃ powder may be uneven. Therefore, the rate of temperature increase is preferably from 2 °C/min to 10 °C/min, more preferably from 3 °C/min to 6 °C/min.

The cooling rate is preferably 5 °C/min or less. Decreasing the cooling rate can promote the growth of the hexagonal tunnel structure along the b axis. This can provide a stable heat transfer and equalize the degree of growth in the b-axis direction. The tungsten oxide powder having an I₍₀₁₀₎/I₍₁₀₃₎ ratio of from 1 to 10 (preferably from 1.0 to 10.0) can thus be obtained. Making the cooling rate 2 °C/min or less can make the I₍₀₁₀₎/I₍₁₀₃₎ ratio be from 3 to 10, and moreover, from 5.0 to 10.0. The lower limit of the cooling rate is preferably 0.1 °C/min or more. If the cooling rate is too low, the growth in the b-axis direction may be so excessive that the I₍₀₁₀₎/I₍₁₀₃₎ ratio may exceed 10.0. When the I₍₀₁₀₎/I₍₁₀₃₎ ratio exceeds 10.0, the hexagonal tunnel structure is apt to be formed in random orientation.

Further, by making the heat load uniform, tungsten oxide powder having a true density of 6.0g/cm³ or more can be attained.

Through the above procedure, the tungsten oxide powder having oxygen deficiency and a hexagonal tunnel structure along the b axis can be produced.

Next, a method for forming an electrode layer using the obtained tungsten oxide powder will be described. The electrode layer is made to contain from 50 wt% to 100 wt% of the tungsten oxide powder having oxygen deficiency and the hexagonal tunnel structure along the b axis.

Examples of other components include a tungsten oxide powder that does not have a hexagonal tunnel structure along the b axis. Molybdenum oxide powder or carbon powder may also be used. Examples of the carbon powder include acetylene black powder.

It is also effective to pulverize and use the tungsten oxide powder having oxygen deficiency and the hexagonal tunnel structure along the b axis. Pulverizing the tungsten oxide powder makes it easy to control the I₍₀₁₀₎/I₍₁₀₃₎ ratio to be from 0.1 to 3, further from 0.5 to 2.0, and yet further from 1.1 to 2.0. In addition, pulverizing the tungsten oxide powder having an I₍₀₁₀₎/I₍₁₀₃₎ ratio of 3 to 10 or 5.0 to 10.0 makes it easy to control the I₍₀₁₀₎/I₍₁₀₃₎ ratio to be 0.1 to 3.

For the pulverizing procedure, ball milling, bead milling, jet milling, and blade milling, and kneading with a kneader, etc. may be used.

The ball milling and the bead milling are methods where pulverizing is performed with a medium mixed. In ball milling, the pulverizing is performed making use of free fall of the medium in a rotating container. In bead milling, the pulverizing is performed through the medium being stirred by a centrifugal force forcibly generated by a stirrer.

The jet milling is a method of pulverizing using a high-pressure gas spurted from a nozzle.

The blade milling is a method of pulverizing by rotating a blade. The pulverizing force can be improved by using plural blades or by providing the blade with a pulverizing edge.

The kneader can perform mixing and kneading at the same time. The pulverizing force can be improved by providing plural blades on the rotor. The kneader is effective in a process of mixing with other materials while pulverizing. Examples of the other materials include powder of a metal oxide other than tungsten oxide, carbon powder, and a binder. Examples of the powder of a metal oxide other than tungsten oxide include molybdenum oxide and niobium oxide. Examples of the binder include polyvinylidene fluoride (PVDF), styrene-butadiene rubber (SBR), and carboxymethyl cellulose (CMC). One or more selected from the group consisting of these other materials may be mixed with the tungsten oxide powder. In other pulverizing methods as well as the method using the kneader, the tungsten oxide powder may be mixed with other materials.

In the pulverizing procedure, it is effective to pulverize a tungsten oxide powder having an I₍₀₁₀₎/I₍₁₀₃₎ ratio of from 3 to 10 as a raw material so as to have an I₍₀₁₀₎/I₍₁₀₃₎ ratio of from 0.1 to 3. Although the method of pulverizing the tungsten oxide powder according to the embodiment is not limited, one example is the following method. In the case of using a ball mill, when the volume of the rotary container is set to 100 vol%, 30 vol% to 40 vol% of a raw material powder is mixed with 20 vol% to 40 vol% of a medium. It is effective to perform the pulverizing at a rotation speed of 50 rpm to 200 rpm for 2 hours to 10 hours. Examples of the medium include zirconia balls having a diameter of 3.0 mm. According to such a pulverizing method, the I₍₀₁₀₎/I₍₁₀₃₎ ratio can be easily controlled to be from 0.1 to 3.

The tungsten oxide powder may be formed into a paste, then applied and dried, and thereby an electrode layer can be obtained.

The cell structure of the power storage device 10 is configured by forming the negative-electrode-side electrode layer 11, the negative electrode layer 12, the separator layer 13, the positive electrode layer 14, and the positive-electrode-side electrode layer 15, as shown in FIG. 4.

The negative-electrode-side electrode layer 11 is provided on an insulating substrate (not shown). Examples of the insulating substrate include a glass substrate, a ceramic substrate, and a resin substrate. The resin substrate is preferable because it allows a wound structure.

After the negative-electrode-side electrode layer 11 is formed on a negative-electrode-side insulating substrate, the negative electrode layer 12 is formed. After the positive-electrode-side electrode layer 15 is formed on a positive-electrode-side insulating substrate, the positive electrode layer 14 is formed. The separator layer 13 is interposed between the negative electrode layer 12 and a positive electrode layer 14. An electrolytic solution is injected into the separator layer 13. Thereafter, sealing is provided to avoid liquid leakage.

In the manner described above, the power storage system can be made.

### (EXAMPLES)

### (Examples 1 to 5, Comparative Examples 1 and 2)

Tungsten oxide powder having an average particle size of 5 µm was prepared as raw material powder.

This raw material powder was subjected to a plasma treatment. In the plasma treatment, air was used as a carrier gas to thrust the raw material powder into inductively coupled plasma flame at an average flow rate of 1.2 m/s. Through this process, the raw material powder was subjected to an oxidation reaction while being sublimated, and thereby a tungsten oxide powder was produced.

Next, a heat treatment was performed in a non-oxidizing atmosphere. The heat treatment conditions were as shown in Table 1. Examples 1 to 5 satisfied preferable production conditions. For Comparative Example 1, the temperature condition was high. The mixed gas of hydrogen and nitrogen contained 5 vol% of hydrogen and 95 vol% of nitrogen.

In Comparative Example 2, the rate of temperature increase and the cooling rate were outside preferable conditions. Comparative Example 3 is Example 1 of Patent Document 2.

**[Table 1]**

| [Table 1] | Atmosphere | Rate of Temperature Increase (°C/min) | Holding Temperature (°C) × Holding Time (min.) | Cooling Rate (°C/min) |
|---|---|---|---|---|
| Example 1 | Mixed gas of hydrogen and nitrogen | 3 | 600°C × 8 min. | 5 |
| Example 2 | Mixed gas of hydrogen and nitrogen | 4 | 700°C × 5 min. | 0.5 |
| Example 3 | Mixed gas of hydrogen and nitrogen. | 5 | 750°C × 3 min. | 2 |
| Example 4 | Mixed gas of hydrogen and nitrogen | 4 | 830°C × 3 min. | 1 |
| Example 5 | Mixed gas of hydrogen and nitrogen. | 4 | 850°C × 2 min. | 2 |
| Comparative Example 1 | Mixed gas of hydrogen and nitrogen | 5 | 950°C × 3 min. | 2 |
| Comparative Example 2 | Nitrogen gas | 1 | 650°C × 5 min. | 50 |
| Comparative Example 3 | - | - | - | - |

The tungsten oxide powders according to the Examples and the Comparative Examples were examined for the amount of oxygen deficiency, the presence or absence of a hexagonal tunnel structure along the b axis, a true density, and the degree of growth in the b-axis direction.

The measurement of the amount of oxygen deficiency was performed by chemical analysis using a KMnO₄ solution to determine the quantity of KMnO₄ required to oxidize all the low charge W ions (W⁴⁺, W⁵⁺) to W⁶⁺. By this analysis, the x value was obtained by replacement into WO₃₋ₓ.

The presence or absence of a hexagonal tunnel structure along the b axis was analyzed by STEM.

The measurement of the true density was performed by Boyle's law using He gas. Measurement of true density was performed using 3g of sample.

As for the degree of growth in the b-axis direction, the I₍₀₁₀₎/I₍₁₀₃₎ ratio was determined by XRD. XRD was performed using a Cu target at a tube voltage of 40 kV and a tube current of 40 mA. The measurement was performed at a scanning angle (2θ) from 10° to 50°. For the peak of the (010) plane and the peak of the (103) plane, peaks detected at about 23.5° and at about 23.8 °were respectively taken as I₍₀₁₀₎ and I₍₁₀₃₎ ratio. The results are shown in Table 2.

In addition, all the tungsten oxide powders according to the Examples and the Comparative Examples had an average particle diameter in the major axis ranging within 1 um to 5 µm, an average particle diameter in the minor axis ranging within 0.1 um to 1 µm, and an average aspect ratio ranging within 1 to 50.

**[Table 2]**

| [Table 2] | Amount of Oxygen Deficiency (WO₃₋ₓ) | Presence or Absence of Hexagonal Tunnel Structure Along b Axis | True Density (g/cm³) | I₍₀₁₀₎/I₍₁₀₃₎ |
|---|---|---|---|---|
| Example 1 | X=0.17 | Present | 7.2 | - |
| Example 2 | X=0.28 | Present | 7.5 | 3.5 |
| Example 3 | X=0.28 | Present | 7.6 | 3.7 |
| Example 4 | X=0.28 | Present | 7.7 | 4.7 |
| Example 5 | X=0.28 | Present | 7.8 | 8.1 |
| Comparative Example 1 | X=1.00 | Absent | 8.3 | - |
| Comparative Example 2 | X=0.20 | Absent | 6.2 | - |
| Comparative Example 3 | X=0.012 | Absent | 7.1 | - |

The tungsten oxide powder according to the Examples had an oxygen deficiency amount of 0.1 ≤ x ≤ 0.3 and a hexagonal tunnel structure along the b axis. In addition, the true density was as high as 6.0g/cm³ or more. Further, the I₍₀₁₀₎/I₍₁₀₃₎ ratio was 2.0 or more, and a moderate growth in the b-axis direction was confirmed.

However, I₍₀₁₀₎ was not detected in Example 1. This is because I₍₀₁₀₎ is not detected in WO_{2.83}. Therefore, this is indicated as "-".

In contrast, no hexagonal tunnel structure along the b axis was observed in the Comparative Examples. In all of the Comparative Examples, the hexagonal tunnels were of random orientation. In Comparative Examples 1 to 3, I₍₀₁₀₎ or I₍₁₀₃₎ was not detected. Therefore, this is indicated as "-".

In Comparative Example 1, since the holding temperature was high, a large amount of oxygen deficiency was introduced.

In Comparative Example 3, since no sublimation process was used, the true density had decreased to 7.1 g/cm³.

When the holding temperature in the non-oxidizing atmosphere was high as in Comparative Example 1, or when the treatment was performed in an inert atmosphere not containing hydrogen or the temperature increase rate or cooling rate was out of the preferred range as in Comparative Example 2, the I₍₀₁₀₎/I₍₁₀₃₎ ratio was not detected. Further, the I₍₀₁₀₎/I₍₁₀₃₎ ratio was not detected when the heat treatment in a non-oxidizing atmosphere itself had not been performed as in Comparative

### Example 3, either.

Next, electrode layers were made using the tungsten oxide powders according to the Examples and the Comparative Examples.

First, the tungsten oxide powders according to Examples 1 to 3 were pulverized to prepare tungsten oxide powders having different I₍₀₁₀₎/I₍₁₀₃₎ ratios as shown in Table 3.

For the pulverization, a ball mill was used. The ball milling was performed at a rotation speed of 50 rpm to 200 rpm for 2 hours to 10 hours. For the medium, zirconia balls having a diameter of 3.0 mm were used.

The tungsten oxide powder after the pulverization had a BET specific surface in a range of from 10 m²/g to 30 m²/g.

Example 4-4 was prepared by mixing 20 wt% of the tungsten oxide powder of Example 1 with 80 wt% of the tungsten oxide powder of Example 4. Example 4-5 was prepared by mixing 30 wt% of the tungsten oxide powder of Comparative Example 1 with 70 wt% of the tungsten oxide powder of Example 4.

**[Table 3]**

| [Table 3] | Tungsten Oxide Powder Before Pulverization | I₍₀₁₀₎/I₍₁₀₃₎ |
|---|---|---|
| Example 1-1 | Example 1 | - |
| Example 1-2 | Example 1 | - |
| Example 2-1 | Example 2 | 0.7 |
| Example 2-2 | Example 2 | 1.2 |
| Example 3-1 | Example 3 | 1.3 |
| Example 3-2 | Example 3 | 1.5 |
| Example 4-1 | Example 4 | 2.3 |
| Example 4-2 | Example 4 | 1.2 |
| Example 4-3 | Example 4 | 0.3 |
| Example 4-4 | Example 1 (20%) + Example 4 (80%) | 0.5 |
| Example 4-5 | Comparative Example 1 (30%) + Example 4 (70%) | 0.7 |
| Example 5-1 | Example 5 | 2.0 |
| Example 5-2 | Example 5 | 1.3 |
| Example 5-3 | Example 5 | 0.4 |

The electrode layers were made to be as shown in Table 4. A paste having the tungsten oxide powder mixed with acetylene black was produced, and application, drying, and pressing was performed. In the Examples and the Comparative Examples, 90 parts by mass of tungsten oxide powder and 10 parts by mass of acetylene black were mixed.

**[Table 4]**

| [Table 4] | Amount per Area (g/cm²) | Film Thickness (µm) | Void Fraction (%) |
|---|---|---|---|
| Example 1-1 | 3.3 | 8 | 30 |
| Example 1-2 | 3.3 | 15 | 20 |
| Example 2-1 | 3.3 | 9 | 13 |
| Example 2-2 | 5.1 | 14 | 30 |
| Example 3-1 | 3.5 | 11 | 25 |
| Example 3-2 | 6.0 | 28 | 29 |
| Example 4-1 | 4.2 | 18 | 22 |
| Example 4-2 | 4.5 | 20 | 26 |
| Example 4-3 | 5.2 | 14 | 45 |
| Example 4-4 | 4.0 | 10 | 22 |
| Example 4-5 | 4.6 | 12 | 27 |
| Example 5-1 | 4.4 | 17 | 28 |
| Example 5-2 | 4.2 | 20 | 28 |
| Example 5-3 | 4.0 | 18 | 25 |
| Comparative Example 1 | 3.8 | 10 | 34 |
| Comparative Example 2 | 1.4 | 8 | 37 |
| Comparative Example 3 | 5.8 | 24 | 37 |

The negative-electrode-side electrode layer 11 and the positive-electrode-side electrode layer 15 were an electro-conductive coated aluminum foil having a thickness of 15 um. The electrode layers according to the Examples and the Comparative Examples were used as the negative electrode layer 12. LiCoO₂ powder was used for the positive electrode layer 14. The amount per area of the positive electrode layer was set to have a sufficient margin with respect to the electric capacity of the negative electrode layer. The electrode area was set to a diameter of 16 mm (about 2 cm²) for both the negative electrode and the positive electrode.

As the separator layer 13, a polyethylene porous layer (having a thickness of 20 µm) was used. A stack configured of the negative-electrode-side electrode layer 11, the negative electrode layer 12, the separator layer 13, the positive electrode layer 14, and the positive-electrode-side electrode layer 15 was incorporated into a cell container made of aluminum. Subsequently, the stack was impregnated with an electrolytic solution and then, a degassing treatment was carried out, and sealing was provided. The electrolyte solution was a mixture of propylene carbonate (PC) and ethyl methyl carbonate (EMC) . As the electrolyte, a mixture of LiPF₆ and LiBF₄ was used.

In the manner described above, power storage devices were made.

The initial discharge capacity, the internal resistance, and the rate performances of the produced power storage devices were measured. The initial discharge capacity was measured at a constant current (0.1 mA), setting the charging voltage and the discharging voltage for the power storage device respectively to 2.5 V and 1.5 V. A discharge capacity per active material (mAh/g) was calculated from the obtained discharge capacity. For the internal resistance measurement, the SOC (State of Charge) was set to 50%, and the direct current (DC) resistance (Ω·cm²) at 1 kHz (magnitude 10 mV) was obtained by an alternate current (AC) impedance method. Further, for the rate performance, the discharge current was varied from 1 C to 100 C to measure the discharge capacity retention ratio at 100 C with respect to the capacity at 1 C discharge. The rate (C) is a unit in terms of an electricity amount that reaches the theoretical capacity in 1 hour.

The measurement results are shown in Table 5.

**[Table 5]**

| [Table 5] | Initial Discharge Capacity (mAh/g) | Internal Resistance (Ω·cm²) | 100 C Rate Performance Capacity Retention Ratio (%) |
|---|---|---|---|
| Example 1-1 | 50 | 7.4 | 50 |
| Example 1-2 | 50 | 9.5 | 65 |
| Example 2-1 | 62 | 3.6 | 70 |
| Example 2-2 | 63 | 3.7 | 75 |
| Example 3-1 | 67 | 3.6 | 73 |
| Example 3-2 | 68 | 4.5 | 68 |
| Example 4-1 | 76 | 5.2 | 83 |
| Example 4-2 | 80 | 3.7 | 80 |
| Example 4-3 | 79 | 3.8 | 85 |
| Example 4-4 | 67 | 6.2 | 72 |
| Example 4-5 | 70 | 7.5 | 56 |
| Example 5-1 | 68 | 4.0 | 84 |
| Example 5-2 | 66 | 3.5 | 84 |
| Example 5-3 | 67 | 3.3 | 85 |
| Comparative Example 1 | 81 | 7.9 | 78 |
| Comparative Example 2 | 47 | 8.3 | 36 |
| Comparative Example 3 | 46 | 8.5 | 31 |

As described above, power storage devices having a low internal resistance and good rate performance were obtained. Next, laminate cells having a negative electrode and a positive electrode stacked were made, and the power density (W/kg) and the energy density (Wh/kg) of the power storage devices were measured, and the cycle retention ratio was measured.

Power density of a single cell of the power storage device expressed in terms of weight, namely, the weight power density P (W/kg) is obtained by P (W/kg) = (V₁² - V₂²) /4RM.

Here, V₁ is a discharge initial voltage (V), V₂ is a discharge termination voltage (V), R is an internal resistance (Ω), and M is a cell weight (kg) .

Energy density E (Wh/kg) is obtained by E (Wh/kg) = (Ah × Vₐᵥₑ)/M, where Ah is a discharge capacity (Ah) at 0.2 C rate, Vₐᵥₑ is an average discharge voltage, and M is a cell weight (kg).

For the cycle retention ratio, an atmospheric temperature was set to 45 °C, and taking the initial discharge capacity at 5C rate as 100%, a capacity retention ratio after 5000 cycles was measured.

The results are shown in Table 6.

**[Table 6]**

| [Table 6] | Power Density (W/kg) | Energy Density (Wh/kg) | Capacity Retention Ratio After 5000 Cycles (%) |
|---|---|---|---|
| Example 1-1 | 6500 | 15 | 65 |
| Example 1-2 | 6600 | 17 | 61 |
| Example 2-1 | 7000 | 18 | 70 |
| Example 2-2 | 7300 | 19 | 65 |
| Example 3-1 | 8200 | 22 | 63 |
| Example 3-2 | 8500 | 21 | 68 |
| Example 4-1 | 16400 | 26 | 85 |
| Example 4-2 | 15400 | 24 | 84 |
| Example 4-3 | 15000 | 23 | 85 |
| Example 4-4 | 11500 | 18 | 67 |
| Example 4-5 | 8900 | 19 | 62 |
| Example 5-1 | 12200 | 23 | 86 |
| Example 5-2 | 13000 | 22 | 84 |
| Example 5-3 | 13200 | 24 | 84 |
| Comparative Example 1 | 5500 | 23 | 55 |
| Comparative Example 2 | 5100 | 17 | 43 |
| Comparative Example 3 | 4400 | 15 | 40 |

As can be seen from the table, the power density and the energy density were high, and so was the cycle retention ratio. This is because the electrode material made of the tungsten oxide powder having oxygen deficiency and the hexagonal tunnel structure along the b axis was used.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention as given in the claims.

## Claims

1. An electrode material made of a tungsten oxide powder having an oxygen deficiency and a hexagonal tunnel structure along a b-axis, wherein the tungsten oxide powder is represented by WO₃₋ₓ where 0.1 ≤ x ≤ 0.3,
**characterized in that** the tungsten oxide powder has a hexagonal tunnel which is formed linearly from one end to the other end in the b-axis direction.

2. The electrode material according to claim 1, wherein a first peak intensity ratio I₍₀₁₀₎/I₍₁₀₃₎ between a peak intensity I₍₀₁₀₎ belonging to a (010) plane and a peak intensity I₍₁₀₃₎ belonging to a (103) plane in an X-ray diffraction spectrum is from 1 to 10.

3. The electrode material according to claim 1, wherein a first peak intensity ratio I₍₀₁₀₎/I₍₁₀₃₎ between a peak intensity I₍₀₁₀₎ belonging to a (010) plane and a peak intensity I₍₁₀₃₎ belonging to a (103) plane in an X-ray diffraction spectrum is from 3 to 10.

4. The electrode material according to any one of claims 1 to 3, wherein the tungsten oxide powder has a true density of 6.0 g/cm³ or more.

5. An electrode layer comprising the electrode material according to any one of claims 1 to 4.

6. The electrode layer according to claim 5, wherein a second peak intensity ratio I₍₀₁₀₎/I₍₁₀₃₎ between a peak intensity I₍₀₁₀₎ belonging to a (010) plane and a peak intensity I₍₁₀₃₎ belonging to a (103) plane in an X-ray diffraction spectrum for the electrode layer is from 0.1 to 3.

7. The electrode layer according to claim 5 or 6, wherein the electrode layer contains 50 wt% to 100 wt% of the electrode material.

8. A power storage device comprising the electrode layer according to any one of claims 5 to 7.

9. A method for producing the electrode layer according to claim 6, the method comprising pulverizing a tungsten oxide powder having a first peak intensity ratio I₍₀₁₀₎/I₍₁₀₃₎ between the peak intensity I₍₀₁₀₎ and the peak intensity I₍₁₀₃₎ in an X-ray diffraction spectrum of from 1 to 10 so as to obtain the second peak intensity ratio I₍₀₁₀₎/I₍₁₀₃₎ of from 0.1 to 3.

10. The method according to claim 9, wherein when the tungsten oxide powder is pulverized, one or more selected from the group consisting of a metal oxide powder other than tungsten oxide, a carbon powder, and a binder are mixed with the tungsten oxide powder.

## Patentansprüche

1. Ein Elektrodenmaterial aus einem Wolframoxidpulver mit einem Sauerstoffunterschuss und einer hexagonalen Tunnelstruktur entlang einer b-Achse, wobei das Wolframoxidpulver durch WO₃₋ₓ dargestellt ist, wobei 0,1 ≤ x ≤ 0,3,
**dadurch gekennzeichnet, dass** das Wolframoxidpulver einen hexagonalen Tunnel aufweist, der linear von einem Ende zum anderen Ende in b-Achsenrichtung ausgebildet ist.

2. Das Elektrodenmaterial gemäß Anspruch 1, wobei ein erstes Peakintensitätsverhältnis I₍₀₁₀₎/I₍₁₀₃₎ in einem Röntgenbeugungsspektrum zwischen einer Peakintensität I₍₀₁₀₎, die zu einer (010)-Ebene gehört, und einer Peakintensität I₍₁₀₃₎, die zu einer (103)-Ebene gehört, 1 bis 10 beträgt.

3. Das Elektrodenmaterial gemäß Anspruch 1, wobei ein erstes Peakintensitätsverhältnis I₍₀₁₀₎/I₍₁₀₃₎ in einem Röntgenbeugungsspektrum zwischen einer Peakintensität I₍₀₁₀₎, die zu einer (010)-Ebene gehört, und einer Peakintensität I₍₁₀₃₎, die zu einer (103)-Ebene gehört, 3 bis 10 beträgt.

4. Das Elektrodenmaterial gemäß einem der Ansprüche 1 bis 3, wobei das Wolframoxidpulver eine Reindichte von 6,0 g/cm³ oder mehr aufweist.

5. Eine Elektrodenschicht, die das Elektrodenmaterial gemäß einem der Ansprüche 1 bis 4 aufweist.

6. Die Elektrodenschicht gemäß Anspruch 5, wobei bei der Elektrodenschicht ein zweites Peakintensitätsverhältnis I₍₀₁₀₎/I₍₁₀₃₎ in einem Röntgenbeugungsspektrum zwischen einer Peakintensität I₍₀₁₀₎, die zu einer (010)-Ebene gehört, und einer Peakintensität I₍₁₀₃₎, die zu einer (103)-Ebene gehört, 0,1 bis 3 beträgt.

7. Die Elektrodenschicht gemäß Anspruch 5 oder 6, wobei die Elektrodenschicht 50 Gew.-% bis 100 Gew.-% des Elektrodenmaterials enthält.

8. Energiespeichervorrichtung, die die Elektrodenschicht gemäß einem der Ansprüche 5 bis 7 aufweist.

9. Ein Verfahren zur Herstellung der Elektrodenschicht gemäß Anspruch 6, wobei das Verfahren das Pulverisieren eines Wolframoxidpulvers mit einem ersten Peakintensitätsverhältnis I₍₀₁₀₎/I₍₁₀₃₎ in einem Röntgenbeugungsspektrum zwischen der Peakintensität I₍₀₁₀₎ und der Peakintensität I₍₁₀₃₎ von 1 bis 10 aufweist, um das zweite Peakintensitätsverhältnis I₍₀₁₀₎/I₍₁₀₃₎ von 0,1 bis 3 zu erhalten.

10. Das Verfahren gemäß Anspruch 9, wobei, wenn das Wolframoxidpulver pulverisiert wird, eines oder mehrere, ausgewählt aus der Gruppe, bestehend aus einem anderen Metalloxidpulver als Wolframoxid, einem Kohlenstoffpulver und einem Bindemittel, mit dem Wolframoxidpulver gemischt werden.

## Revendications

1. Matériau d'électrode constitué d'une poudre d'oxyde de tungstène ayant un déficit en oxygène et une structure de tunnel hexagonal le long d'un axe b, dans lequel la poudre d'oxyde de tungstène est représentée par WO₃₋ₓ où 0,1 ≤ x ≤ 0,3,
**caractérisé en ce que** la poudre d'oxyde de tungstène comporte un tunnel hexagonal qui est formé linéairement d'une extrémité à l'autre extrémité dans la direction de l'axe b.

2. Matériau d'électrode selon la revendication 1, dans lequel un premier rapport d'intensités de pic I₍₀₁₀₎/I₍₁₀₃₎ entre une intensité de pic I₍₀₁₀₎ appartenant à un plan (010) et une intensité de pic I₍₁₀₃₎ appartenant à un plan (103) dans un spectre de diffraction des rayons X est de 1 à 10.

3. Matériau d'électrode selon la revendication 1, dans lequel un premier rapport d'intensités de pic I₍₀₁₀₎/I₍₁₀₃₎ entre une intensité de pic I₍₀₁₀₎ appartenant à un plan (010) et une intensité de pic I₍₁₀₃₎ appartenant à un plan (103) dans un spectre de diffraction des rayons X est de 3 à 10.

4. Matériau d'électrode selon l'une quelconque des revendications 1 à 3, dans lequel la poudre d'oxyde de tungstène a une masse volumique absolue de 6,0 g/cm³ ou plus.

5. Couche d'électrode comprenant le matériau d'électrode selon l'une quelconque des revendications 1 à 4.

6. Couche d'électrode selon la revendication 5, dans laquelle un deuxième rapport d'intensités de pic I₍₀₁₀₎/I₍₁₀₃₎ entre une intensité de pic I₍₀₁₀₎ appartenant à un plan (010) et une intensité de pic I₍₁₀₃₎ appartenant à un plan (103) dans un spectre de diffraction des rayons X pour la couche d'électrode est de 0,1 à 3.

7. Couche d'électrode selon la revendication 5 ou 6, la couche d'électrode contenant 50 % en poids à 100 % en poids du matériau d'électrode.

8. Dispositif de stockage d'énergie comprenant la couche d'électrode selon l'une quelconque des revendications 5 à 7.

9. Procédé de production de la couche d'électrode selon la revendication 6, le procédé comprenant la pulvérisation d'une poudre d'oxyde de tungstène ayant un premier rapport d'intensités de pic I₍₀₁₀₎/I₍₁₀₃₎ entre l'intensité de pic I₍₀₁₀₎ et l'intensité de pic I₍₁₀₃₎ dans un spectre de diffraction des rayons X de 1 à 10 de préférence à obtenir le deuxième rapport d'intensités de pic I₍₀₁₀₎/I₍₁₀₃₎ de 0,1 à 3.

10. Procédé selon la revendication 9, dans lequel, lorsque la poudre d'oxyde de tungstène est pulvérisée, l'un ou plusieurs choisis dans le groupe constitué d'une poudre d'oxyde métallique autre que l'oxyde de tungstène, d'une poudre de carbone et d'un liant sont mélangés avec la poudre d'oxyde de tungstène.
